# EUROPEAN PATENT SPECIFICATION

(11) **EP 2 829 563 B1**
(45) Date of publication and mention of the grant of the patent: **18.05.2016**
(21) Application number: 13764080.1
(22) Date of filing: 14.03.2013
(51) Int. Cl.: C08G 73/10, C08J 5/24

(54) **HEAT-CURABLE SOLUTION COMPOSITION, AND CURED PRODUCT, PREPREG AND FIBER-REINFORCED COMPOSITE MATERIAL USING SAME**
WÄRMEHÄRTBARE LÖSUNGSZUSAMMENSETZUNG UND GEHÄRTETES PRODUKT, PREPREG UND FASERVERSTÄRKTER VERBUNDSTOFF DAMIT
COMPOSITION DE SOLUTION DURCISSABLE À LA CHALEUR ET PRODUIT DURCI, PRÉIMPRÉGNÉ ET MATÉRIAU COMPOSITE RENFORCÉ PAR DES FIBRES À L'AIDE DE CELUI-CI

(30) Priority: 19.03.2012 JP 2012061855; 19.03.2012 JP 2012061895
(43) Date of publication of application: 28.01.2015
(73) Proprietor: Ube Industries, Ltd., Ube-shi, Yamaguchi 755-8633 (JP)
(72) Inventor: MIURA, Norio, Ichihara-shi Chiba 290-0045 (JP); YAMAGUCHI, Hiroaki, Ichihara-shi Chiba 290-0045 (JP); OZAWA, Hideki, Ichihara-shi Chiba 290-0045 (JP); TAGUCHI, Mitsushi, Ichihara-shi Chiba 290-0045 (JP)
(74) Representative: Grünecker Patent- und Rechtsanwälte PartG mbB
(86) International application number: PCT/JP2013/057179
(87) International publication number: WO 2013/141132

(56) References cited:
- EP-A1- 1 728 813
- WO-A1-2009/123042
- WO-A2-2013/003397
- JP-A- H08 253 585
- JP-A- H08 510 496
- JP-A- 2006 104 440
- JP-A- 2007 308 519
- US-A- 5 432 001
- US-A- 6 025 460

## Description

### FIELD OF THE INVENTION

The present invention relates to a thermosetting solution composition for providing an imide oligomer having an addition-reactive group at an end thereof and the cured product thereof by being heating, a cured product using the same, a prepreg, and a fiber-reinforced composite material.

### BACKGROUND OF THE INVENTION

It is conventionally known that oligomers formed of polyimide having both ends capped with an addition-reactive group is used as a matrix resin of molded products and fiber-reinforced composite materials since the cured product thereof has a high heat resistance. It is said that, of these oligomers, an imide oligomer having an end capped with 4- (2-phenylethynyl) phthalic anhydride having a god balance of properties including formability, heat resistance and mechanical properties. For example, patent document 1 discloses, as an object, to provide an end-modified imide oligomer having an excellent heat resistance and mechanical properties, and a high practical use, and further discloses an end-modified imide oligomer which is produced by reacting 2, 3, 3', 4'-biphenyl tetracarboxylic dianhydride with an aromatic diamine compound and 4-(2-phenylethynyl) phthalic anhydride, and has a logalithmic viscosity of 0.05⁻¹, and the cured product thereof.

Patent document 2 discloses, as an object, to provide a thermosetting solution composition which is produced without using a high-boiling solvent such as N-methyl-2-pyrrolidone, N, N-dimethylacetamide and the like in order to easily remove a solvent in a forming step of a cured product, and an uncured resin composite formed of a fiber-reinforced material impregnated therewith, and further discloses a thermosetting solution composition produced by dissolving partial lower aliphatic alkyl ester of aromatic tetracarboxylic acid compound mainly containing 2, 3, 3', 4'-biphenyltetracarboxylic acid, an aromatic diamine compound, and partial lower aliphatic alkyl ester of 4- (2-phenylethynyl) phtalic acid in an organic solvent mainly containing lower aliphatic alcohol, and an uncured resin composite using the thermosetting solution composition.

Patent document 3 discloses thermosetting solutions comprising a lower aliphatic alkyl ester of 2,3,3',4'-biphenyl tetracarboxylic acid, 4- (2-phenylethynyl) phthalic acid and 1,4-diaminobenzene or 1,3-diaminobenzene, optionally with 3,3',4,4'-biphenyl tetracarboxylic acid in a content of 10 mol% or less based on the acid component . Patent documents 4 to 6 disclose further prepolymer compositions comprising 2,3,3',4'-biphenyl tetracarboxylic acid and/or 3,3',4,4'-biphenyl tetracarboxylic acid.

### Citation List

### Patent Literature

Patent Literature 1: JP 2000-219741
Patent Literature 2: JP 2007-308519
Patent Literature 3: EP 1 728 813 A1
Patent Literature 4: US 6,025,460 B1
Patent Literature 5: US 5,432,001 B1
Patent Literature 6: WO 2013/003397 A2

### SUMMARY OF THE INVENTION

### Technical Problem

1 The cured products described in Patent Literatures 1 and 2 have excellent physical properties and chemical properties. However, there is much room for improvement in oxidation resistance. In particular, there is the question that, where diamine having ether bond such as 1,3-bis(4-aminophenoxy)benzene and 4,4-diaminodiphenyl ether is used as an aromatic diamine component, an excellent oxidation resistance cannot be obtained.

It is an object of the present invention to provide a thermosetting solution composition for providing a cured product having an excellent oxidation resistance and a high glass transition point (Tg).

It is another other object of the present invention to provide a thermosetting solution composition in which a reaction failure is not seen and which is suitable for using in a production of a fiber-reinforced composite material.

It is still another object of the present invention to provide a cured product using the thermosetting solution composition described above, a prepreg, and a fiber-reinforced composite material.

### Solution to Problem

As a result of earnest researches to achieve the above described object, the present inventors have found that, where a prescribed aromatic diamine without oxygen atom in the molecule thereof is used as an aromatic diamine component, it is possible to provide a cured product having an excellent oxidation resistance and a high glass transition point (Tg), a thermosetting solution composition in which a reaction failure is not seen in curing and which is suitable for using in a production of a fiber-reinforced composite material, a cured product using the thermosetting solution composition, a prepreg, and a fiber-reinforced composite material, and have achieved the present invention.

According to a first embodiment of the present invention, there is provided a thermosetting solution composition characterized by being obtained by mixing: (A) an aromatic tetracarboxylic acid component containing at least 20 mol % of a 2,3,3',4'-biphenyltetracarboxylic acid compound, and 20 to 80 mol % of a 3,3',4,4'-biphenyltetracarboxylic acid compound; (B) an aromatic diamine component without an oxygen atom in the molecule, including aromatic diamine without an oxygen atom in the molecule in which two carbon-nitrogen axes derived from amino groups are present on the same straight line, and aromatic diamine without an oxygen atom in the molecule in which two carbon-nitrogen axes derived from amino groups are not present on the same straight line; and (C) an end-capping agent having a phenylethynyl group.

In the thermosetting solution composition described above, the aromatic diamine without an oxygen atom in the molecule in which two carbon-nitrogen axes derived from amino groups are present on the same straight line may be 1,4-diaminobenzene, and the aromatic diamine without an oxygen atom in the molecule in which two carbon-nitrogen axes derived from amino groups are not present on the same straight line may be 1,3-diaminobenzene.

Further, the (C) an end-capping agent having a phenylethynyl group may be a 4-(2-phenylethynyl) phthalic acid compound.

According to a second embodiment of the present invention, there is provided a cured product characterized by being obtained by heat-curing the thermosetting solution composition described above.

According to a third embodiment of the present invention, there is provided a prepreg characterized by being obtained by impregnating a fibrous reinforcing material with the thermosetting solution composition described above.

According to a fourth embodiment of the present invention, there is provided a fiber-reinforced composite material characterized by being obtained by heat-curing the prepreg described above.

### Advantage of the Invention

As described above, according to the present invention, there can be provided a cured product having an excellent oxidation resistance and a high glass transition point (Tg), a thermosetting solution composition in which a reaction failure is not seen in curing and which is suitable for using in a production of a fiber-reinforced composite material, a cured product using the thermosetting solution composition, a prepreg, and a fiber-reinforced composite material.

### DETAILED DESCRIPTION OF THE INVENTION

There will be described in detail preferred embodiments of a thermosetting solution composition according to the present invention.

The thermosetting solution composition according to the present embodiment is a solution composition which provides an imide oligomer having an addition-reactive functional group at the end and a cured product thereof when it is heated. The imide oligomer includes an aromatic tracarboxylic acid component containing at least 20 mol % of a 2,3,3',4'-biphenyltetracarboxylic acid compound, and an aromatic diamine component without an oxygen atom in the molecule, including aromatic diamine without an oxygen atom in the molecule in which two carbon-nitrogen axes derived from amino groups are present on the same straight line, and aromatic diamine without an oxygen atom in the molecule in which two carbon-nitrogen axes derived from amino groups are not present on the same straight line. The imide oligomer, and has a phenylethynyl group, which is an addition-reactive functional group, at the end.

The aromatic tetracarboxylic acid component, which is (A) component of the thermosetting solution composition according to the present invention, contains 2,3,3',4'-biphenyltetracarboxylic acid compound. The content of the 2,3,3',4'-biphenyltetracarboxylic acid compound may be preferably at least 20 molar %, more preferably at least 30 molar % in the (A) component. Where the content is low, it may not be preferred since the obtained cured product may have low glass transition point (Tg) and insufficient toughness. The aromatic tetracarboxylic acid component may contain the other biphenyltetracarboxylic acid compound. The other biphenyltetracarboxylic acid compound includes 3,3',4,4'-biphenyltetracarboxylic acid compound, 2,2',3,3'-biphenyltetracarboxylic acid compound and the like.

The 2,3,3',4'-biphenyltetracarboxylic acid compound includes 2,3,3',4'-biphenyltetracarboxylic acid, 2,3,3',4'-biphenyltetracarboxylic dianhydride (a-BPDA), and an ester or salt of 2,3,3',4'-biphenyltetracarboxylic acid.

Similarly, the 3,3',4,4'-biphenyltetracarboxylicacid compound includes 3,3',4,4'-biphenyltetracarboxylic acid, 3,3',4,4'-biphenyltetracarboxylic dianhydride (s-BPDA), and an ester or salt of 3,3',4,4'-biphenyltetracarboxylic acid. The 2,2',3,3'-biphenyltetracarboxylic acid compound includes 2,2',3,3'-biphenyltetracarboxylic acid, 2,2',3,3'-biphenyltetracarboxylic dianhydride, and an ester or salt of 2,2',3,3'-biphenyltetracarboxylic acid.

In the present embodiment, the 3,3',4,4'-biphenyltetracarboxylic acid compound is used in an amount of 20 to 80 molar %, in particular 30 to 70 molar % in the (A) component. Where the content of the 3,3',4,4'-biphenyltetracarboxylic acid compound is low, the oxidation resistance of the cured product may be insufficient. On the other hand, where the content of the 3,3',4,4'-biphenyltetracarboxylic acid compound is high, the stability of the obtained thermosetting solution composition and the toughness of the cured product may be insufficient.

The aromatic diamine component without an oxygen atom in the molecule, which is the (B) component of the thermosetting solution composition of the present embodiment, in the molecule, includes aromatic diamine without an oxygen atom in the molecule in which two carbon-nitrogen axes derived from amino groups are present on the same straight line, and aromatic diamine without an oxygen atom in the molecule in which two carbon-nitrogen axes derived from amino groups are not present on the same straight line. In this case, "without an oxygen atom in the molecule" means without ether bond, carbonyl group or the like in the molecule.

The aromatic diamine without an oxygen atom in the molecule in which two carbon-nitrogen axes derived from amino groups are present on the same straight line includes 1,4-diaminobenzene (PPD), 2,5-diaminotoluene, 2,2'-bis(trifluoromethyl) benzidine, 2,2'-dimethyl benzidine, 3, 3'-dimethyl benzidine, 3,3',5,5'-tetra methyl benzidine, 4,4-diaminooctafluorobiphenyl, and the like. These may be used alone or in combination of two or more.

Further, the aromatic diamine without an oxygen atom in the molecule in which two carbon-nitrogen axes derived from amino groups are not present on the same straight line includes 1,3-diaminobenzene (MPD), 2,4-diaminotoluene, 2,6-diaminotoluene, 3,3'-diaminodiphenylmethane, 4,4'-diaminodiphenylmethane, 2,2-bis(3-animophenyl) propane, 2,2-bis(4-animophenyl) propane, 9,9'-bis(4-animophenyl) fluorene, and the like. These may be used alone or in combination of two or more.

In the present embodiment, a combination of 1,4-diaminobenzene (p-phenylenediamine, PPD) and 1,3-diaminobenzene (m-phenylenediamine, MPD) are preferably used as the aromatic diamine without an oxygen atom in the molecule. In this case, PPD is preferably used in an amount of 10 to 90 molar %, in particular, 20 to 80 molar % in the (B) component. Outside of this range, the oxidation resistance and toughness of the cured product may occasionally be insufficient.

The end-capping agent to be used to introduce an addition-reactive functional group, which is the (C) component of the thermosetting solution composition of the present embodiment, includes preferably the one having ethynyl group, in particular phenylethynyl group. Though the end to be capped may be either amine end or carboxylic acid end, the end-capping agent may be preferably the one which reacts with an amine end to form an imido group. Such an end-capping agent includes a 4-(2-phenylethynyl) phthalic acid compound. The 4-(2-phenylethynyl) phthalic acid compound includes 4-(2-phenylethynyl) phthalic anhydride, and an ester or salt of 4-(2-phenylethynyl) phthalic acid.

The thermosetting solution composition of the present embodiment may contain a component having an action of promoting an imidization reaction. The content thereof may be preferably 0.01 to 3 mass % based on the amount of the total components. For example, imidazole compounds may have an action of promoting resolution in preparation of the solution composition and can shorten a resolution time. Further, since the imidazole compounds have an action of promoting curing when an uncured shaped product is heated under pressure to produce a cured product (cured shaped product), it is possible to easily obtain a cured shaped product having an excellent properties. The imidazole compound includes, for example, 2-methylimidazole, 1,2-dimethylimidazole or the like, which is a known compound as an imidization catalyst for polyimide.

It is preferred to use the aromatic diamine component in an excess amount over stoichiometric amount based on the amount of the aromatic tetracarboxylic acid component in order to obtain an imide oligomer in which the end of an amine group is capped. The used amount of the aromatic diamine component is properly adjusted so that the obtained imide oligomer has a desired molecular weight, and it may be preferably 1.05 to 2.0 moles, in particular 1.10 to 1.25 moles per 1 mole of the aromatic carboxylic acid component. The end capping agent may be used in a molar amount as much as 1.8-2.2 times, preferably 1.95 to 2.0 times a molar amount corresponding to a difference between the molar amount of the aromatic diamine component and the molar amount of the aromatic carboxylic acid component. Incidentally, in the present embodiment, it is possible to use a mixture of imide oligomers which are individually produced and have different molecular weights.

The thermosetting solution composition according to the present embodiment is produced by mixing the aromatic tetracarboxylic acid component, the aromatic diamine component, and the end-capping agent described above by the known method. For example, the first method comprises preparing aromatic tetracarboxylic dianhydride, aromatic diamine, and 4-(2-phenylethynyl)phthalic anhydride so that the total amount of an acid anhydride group in these components is equal to the total amount of an amino group in these components, and mixing these components in a solvent at a temperature of about 100 °C or lower, in particular 80 °C or lower to prepare the thermosetting solution composition.

The solvent to be used in the method described above includes N-methyl-2-pyrrolidone (NMP), N,N-dimethylformamide, N,N-dimethylacetamide (DMAc), N,N-diethylacetamide, N-methylcaprolactam, γ-butyrolactam (GBL), cyclohexanone, and the like. These solvents may be used alone or in combination of two or more. The known method regarding the polyimide precursor solution composition can be applied to the selection of these solvents.

The obtained solution can be used without any treatment, or alternatively, after properly concentrating or diluting. If necessary, the solution may be poured into water or the like, and a powder product is isolated from the water. The isolated powder product can be properly dissolved in a solvent to use as the thermosetting solution composition of the present embodiment.

The thermosetting solution composition of the present embodiment can be also prepared by, for example, the second method. That is, aromatic tetracarboxylic dianhydride and 4-(2-phenylethynyl)phthalic anhydride are added to a solution containing lower aliphatic alcohol to form a suspension. The suspension is heated to be converted into partial lower aliphatic alkyl ester, which is dissolved in the solution. Then, aromatic diamine is added to the solution to prepare the thermosetting solution composition. The obtained solution can be used without any treatment, or alternatively, after properly concentrating or diluting.

The solvent to be used in the method described above includes an organic solvent containing a lower aliphatic alcohol (monovalent aliphatic alcohol having 1 to 6 carbon atoms) as a main component. In particular, methanol or ethanol is preferred. A mixture of lower aliphatic alcohols can be employed. However, if the mixture is used, the mixture contains preferably at least 50 vol. %, more preferably at least 80 vol. %, of methanol or ethanol. A low boiling point solvent (for example, ketone) other than lower aliphatic alcohols is also employable in combination with the lower aliphatic alcohol. In this case, the lower boiling point solvent other than lower aliphatic alcohols preferably is in an amount of 30 vol. % or less.

The lower aliphatic alcohol to be used for obtaining the partial lower aliphatic alkyl ester described above includes preferably methanol. Where methyl ester is used as the lower aliphatic alkyl ester, the cured product produced using the thermosetting solution composition shows an excellent shape retaining property.

If environmental pollution caused by methanol generated when the solvent is evaporated and removed from the uncured product produced using the thermosetting solution composition, or when the uncured product is subsequently heated to obtain the cured product, should be obviated, the following method may be used. That is, after the thermosetting solution composition is prepared using methanol, the thermosetting solution composition is dried for a while to obtain a thermosetting powder composition. Then, the obtained powder composition is dissolved in a solvent which has a low environmental load such as ethanol to prepare another thermosetting solution composition, and uncured product is prepared using the obtained other thermosetting solution composition to produce a cured product.

The temperature, at which the solvent is removed by evaporation to obtain the thermosetting powder composition, is preferably 60°C or lower. The thermosetting powder composition may contain a small amount of the solvent, and therefore, may contain preferably 18 to 25 %, more preferably 20 to 22 % of a volatile component such as the residual solvent and alcohol generated in heating at a high temperature to produce the cured product.

The thermosetting solution composition obtained described above or the composite material prepared by impregnating a fiber-reinforced material with the thermosetting solution composition can be heated in the presence or absence of a curing catalyst to produce a cured product. For example, where the thermosetting solution composition is applied to a supporting material and the resulting material is heat-cured at a temperature of 260 to 500°C for 200 minutes to obtain a film. Alternatively, the thermosetting powder composition is injected in a molding and is subjected to compression molding at a temperature of 10 to 260°C under a pressure of 1 to 1000kg/cm² for 1 to 240 minutes to form a preform. Then, the preform is heated at a temperature of 260 to 500°C and a normal pressure without pressurization for 10 to 40 hours to produce a molded product. By using the thermosetting solution composition of the present embodiment, it is possible to obtain a cured product (molded product containing an imide group) having Tg of 340°C or higher. Where the measured value is less than 340°C, Tg is unidentifiable.

A fiber-reinforced composite material is obtained by using the thermosetting solution composition of the present embodiment as follows: At first, a sheet-like matrix material formed of high strength fibers is impregnated with the thermosetting solution composition, and if necessary, the resulting matrix material is heated to remove a portion of the solvent, thus preparing an uncured fiber-reinforced composite material (prepreg). The prepreg is required to contain a sufficient amount of a volatile component in order to retain good handling characteristics (drapeability, tackiness) and a sufficient pickup of a resin-forming component to form a fiber-reinforced composite material having a good resin content. For this purpose, it is preferable to impregnate the sheet-like matrix material formed of high strength fibers with the thermosetting solution composition containing a proper amount of the resin-forming component by dip method or cast method, and then to heat-dry the sheet-like matrix material in a dry air oven to remove an excessive volatile component. Where the sheet-like matrix material formed of high strength fibers is impregnated with a certain amount of the thermosetting solution composition and is heat-dried at a temperature of 40 to 150°C for 0.5 to 30 minutes, it is possible to properly prepare a prepreg having a preferable resin content (Rc) of 30 to 50 mass % and a volatile content (Vc) of 10 to 30 mass %.

The sheet-like matrix material formed of high strength fibers to be used for producing the prepreg includes the one formed of known high strength fibers which is used for producing a fiber-reinforced composite material. Preferable high strength fibers include ceramic fibers such as carbon fibers, aramide fibers, glass fibers, and tirano fibers (titanium dioxide fibers).

The obtained prepreg is preferably coated on both surfaces with a resin sheet such as a polyethylene terephthalate (PET) sheet and a covering sheet such as a paper sheet for its storage and transportation. The prepreg in the coated state is stored and transported in the form of a roll.

The fiber-reinforced composite material (cured product) may be produced from the prepreg by known methods. For example, a roll of prepreg is cut to give plural sheets having the desired size. The plural prepreg sheets (for instance, from several sheets to sheets of more than a hundred) are laminated, and the formed prepreg laminate is heated by means of a hot press or an autoclave at a temperature of 140 to 310°C under a normal pressure or reduced pressure for 5 to 270 minutes to dry and imidize it, and thereafter the imidized laminate is heater at a temperature of 250 to 500°C under a normal pressure or a pressure of 0.1 to 20 MPa for 1 second to 240 minutes to obtain the fiber-reinforced composite material.

The fiber-reinforced composite material, which is obtained by heat-curing the uncured fiber-reinforced composite material (prepreg) impregnated with the thermosetting solution composition of the present embodiment, has excellent mechanical properties and is suitable for use of an airplane or instruments for a space industry.

The present invention is further explained by the following concrete examples. In the following examples, the measured values and the like are obtained in the following methods.

### (1) Thermal Oxidation Stability (TOS)

Resin films each having a thickness of about 0.05 mm (Reference Example 1, Examples 2-6 and Comparative Example 1-5) or about 0.12 mm (Examples 7-15 and Comparative Example 6-8) were exposed to air in an inert gas oven INH-21CD-S (Koyo thermosystem Co. Ltd) at a temperature of 350°C for 100 hours. Weight losses of these resin films were determined in terms of weight percent relative to reference weight values. The reference weight values were determined by weighing the resin films after they were dried 270°C for 4 hours. Three samples are measured at the same time and these measured values are averaged to determine TOS values.

TOS values for the CFRP plates of Examples 16, 17 and Comparative Example 9 were determined in the same manner as above.

### (2) Glass Transition Temperature (Tg)

### Reference Example 1, Examples 2-6, Comparative Examples 1-5:

Viscoelasticity of the resin films having a thickness of about 0.05mm, which were produced by the method described in Examples, were measured in a nitrogen atmosphere by means of a solid-state viscoelasticity analyzer RSA III produced by TA Instrument Japan Co. Ltd., while raising a temperature at a temperature elevation rate of 3°C/minute at a frequency of 10Hz in a stretched mode. A temperature at an intersection of tangent lines on inflection points of a curve showing a relation between storage elastic coefficient and a temperature was determined as a glass transition temperature. Tg determined from a temperature at a peak top of tan δ was considered as Td (tan δ).

### Reference Examples 7-9, Examples 10-15, Comparative Examples 6-8:

Viscoelasticity of the resin films each having a thickness of about 0.12mm, which were produced by the method described in Examples, were measured in a nitrogen atmosphere (20ml/min) by means of a differential scanning calorimetry apparatus Q100 series produced by TA Instrument Japan Co. Ltd. , while raising a temperature at a temperature elevation rate of 20°C/minute to obtain a DSC curve. A temperature at an intersection of tangent lines on inflection points of the DSC curve was determined as a glass transition temperature.

### Reference Example 16, Example 17, Comparative Example 9:

Glass transition temperatures of the CFRP plates obtained in Examples were determined in the same manner as Reference Example 1 except that the measurement mode is three-point bending mode, and the temperature elevation rate is 10°C/minute.

### (3) Viscosity

The viscosity was measured at 30°C by means of an E-type viscometer (available from Tokyo Measuring Apparatus Co., Ltd.).

### (4) Interlaminar Shear Strength

Measurement was performed according to ASTM D2344. In measurement, a universal testing machine (model number: 5582) produced by Instron Co., Ltd., was employed.

### (5) Measurements of carbon fiber content (Vf) and Void fraction (Vv)

A carbon fiber content (Vf) and void fraction (Vv) were measured by means of sulfuric acid decomposition method according to ASTM D3171.

In the following examples, the monomer components were represented as follows:
a-BPDA: 2,3,3',4'-biphenyltetracarboxylic dianhydride
s-BPDA: 3,3',4,4'-biphenyltetracarboxylic dianhydride
PPD: 1,4-diaminobenzene (p-phenylene diamine)
MPD: 1,3-diaminobenzene (m-phenylene diamine)
PEPA: 4-(phenylethynyl) phthalic anhydride
TPE-R: 1,3-bis(4-aminophenoxy) benzene
ODA: 4,4'-diaminodiphenyl ether
3,4-ODA: 3,4'- diaminodiphenyl ether
NMP: N-methylpyrrolidone
2-Mz: 2-methylimidazole

### [REFERENCE EXAMPLE 1]

In a vessel made of polyethylene and provided with a cap were placed 2.896 g (0.02678 mol) of PPD, 1.241g (0.01148 mol) of MPD, which were diamine components, and 36.8634g of NMP, which was a solvent. The mixture was stirred to give a homogeneous solution. Then, to the solution was added under stirring 10.0008 g (0.03399 mol) of a-BPDA and 2.109 g (0.00850 mol) of PEPA, which were acid components, to give a homogeneous solution (thermosetting solution composition). This homogeneous solution was spread over a glass plate and successively heated at 80°C for 30 min. The homogeneous solution was further spread over the resulting glass plate and heated on a hot plate at 80°C for 20 min and in an oven at 150°C for 10 min. Thereafter, the resulting glass plate was set in an electric oven and a temperature therein was raised from 200°C to 370°C for about 28 minutes. The glass plate was heated at a temperature of 370°C for about 60 minutes to give a resin film having a thickness of about 0.05 mm. The properties of the film are shown in Table 1.

### [EXAMPLE 2]

The procedures of Reference Example 1 were repeated except that the acid components consisting of 4.285 g (0.01456 mol) of s-BPDA and 9.999 g (0.03399 mol) of a-BPDA and 3.014 g (0.03399 mol) of PEPA, the diamine components consisting of 4.138 g (0.03826 mol) of PPD and 1.773g (0.01640 mol) of MPD, and 47.585g of NMP were used, to give a thermosetting solution composition and a film. The properties of the film are shown in Table 1.

### [COMPARATIVE EXAMPLE 1]

The procedures of Reference Example 1 were repeated except that the acid components consisting of 25.000 g (0.08497 mol) of a-BPDA instead of s- BPDA and 5.275 g (0.02125 mol) of PEPA, the diamine component consisting of 10.338 g (0.09560 mol) of PPD without MPD, and 83. 273g of NMP were used, to give a thermosetting solution composition and a film. However, the molded product was broken down while being heated, and a resin film cannot be produced.

### [COMPARATIVE EXAMPLE 2]

The procedures of Comparative Example 1 were repeated except that the acid components consisting of 19.999 g (0.06797 mol) of a-BPDA instead of s-BPDA and 4.221 g (0.01700 mol) of PEPA, the diamine component consisting of 5.790 g (0.05354 mol) of PPD and 6.709 g (0.02295 mol) of TPE-R without MPD, and 76.487g of NMP were used, to give a thermosetting solution composition and a film. The properties of the film are shown in Table 2. The obtained film had inferior Tg and TOS.

### [COMPARATIVE EXAMPLE 3]

The procedures of Comparative Example 1 were repeated except that the acid components consisting of 15.000 g (0.05098 mol) of a-BPDA instead of s-BPDA and 3.163 g (0.01274 mol) of PEPA, the diamine components consisting of 4.341 g (0.04014 mol) of PPD and 3.445 g (0.01721 mol) of ODA without MPD, and 53.658g of NMP were used, to give a thermosetting solution composition and a film. The properties of the film are shown in Table 2. The obtained film had inferior Tg and TOS.

### [EXAMPLE 3]

The procedures of Reference Example 1 were repeated except that the acid components consisting of 6.499 g (0.02209 mol) of s-BPDA, 6.500 g (0.02209 mol) of a-BPDA and 2.741 g (0.01104 mole) of PEPA, the diamine components consisting of 2.687 g (0.02485 mol) of PPD and 2.686g (0.02484 mol) of MPD, and 43.305g of MPD were used, to give a thermosetting solution composition and a film. The properties of the film are shown in Table 1.

### [COMPARATIVE EXAMPLE 4]

The procedures of Example 2 were repeated except that the acid components consisting of 10.000 g (0.03399 mol) of s-BPDA, 10.001 g (0.03399 mol) of a-BPDA and 4.219 g (0.01700 mole) of PEPA, the diamine component *consisting* of 8.272 g (0.07649 mol) of MPD without PPD, and 66. 621g of NMP were used, to give a thermosetting solution composition and a film. The properties of the film are shown in Table 2. The obtained film had an inferior Tg.

### [COMPARATIVE EXAMPLE 5]

The procedures of Reference Example 1 were repeated except that the acid components consisting of 12.001 g (0.04079 mol) of s-BPDA instead of s-BPDA and 2.530 g (0.01019 mol) of PEPA, the diamine components consisting of 2.481 g (0.02294 mol) of PPD and 2.482 g (0.02295 mol) of MPD, and 39.972g of NMP were used, to give a thermosetting solution composition and a film. However, the molded product was broken down while being heated, and a resin film cannot be produced.

### [EXAMPLE 4]

The procedures of Reference Example 1 were repeated except that the acid components consisting of 8.998 g (0.03058 mol) of s-BPDA, 3.857 g (0.01311 mol) of a-BPDA and 2.711 g (0.01092 mole) of PEPA, the diamine components consisting of 1.063 g (0.00983 mol) of PPD and 4.253g (0.03932 mol) of MPD, and 42.821g of NMP were used, to give a thermosetting solution composition and a film. The properties of the film are shown in Table 1.

### [EXAMPLE 5]

The procedures of Reference Example 1 were repeated except that the acid components consisting of 9.000 g (0.03059 mol) of s-BPDA, 3.856 g (0.01311 mol) of a-BPDA and 2.711 g (0.01092 mole) of PEPA, the diamine components consisting of 4.252 g (0.03932 mol) of PPD and 1.064g (0.00984 mol) of MPD, and 42. 825g of NMP were used, to give a thermosetting solution composition and a film. The properties of the film are shown in Table 1.

### [EXAMPLE 6]

The procedures of Reference Example 1 were repeated except that the acid components consisting of 9.000g (0.03059 mol) of s-BPDA, 5.399 g (0.01835 mol) of a-BPDA and 3.037 g (0.01223 mole) of PEPA, the diamine components consisting of 1.323 g (0.01223 mol) of PPD and 4.631g (0.04282 mol) of MPD, and 47. 965g of NMP were used, to give a thermosetting solution composition and a film. The properties of the film are shown in Table 1.

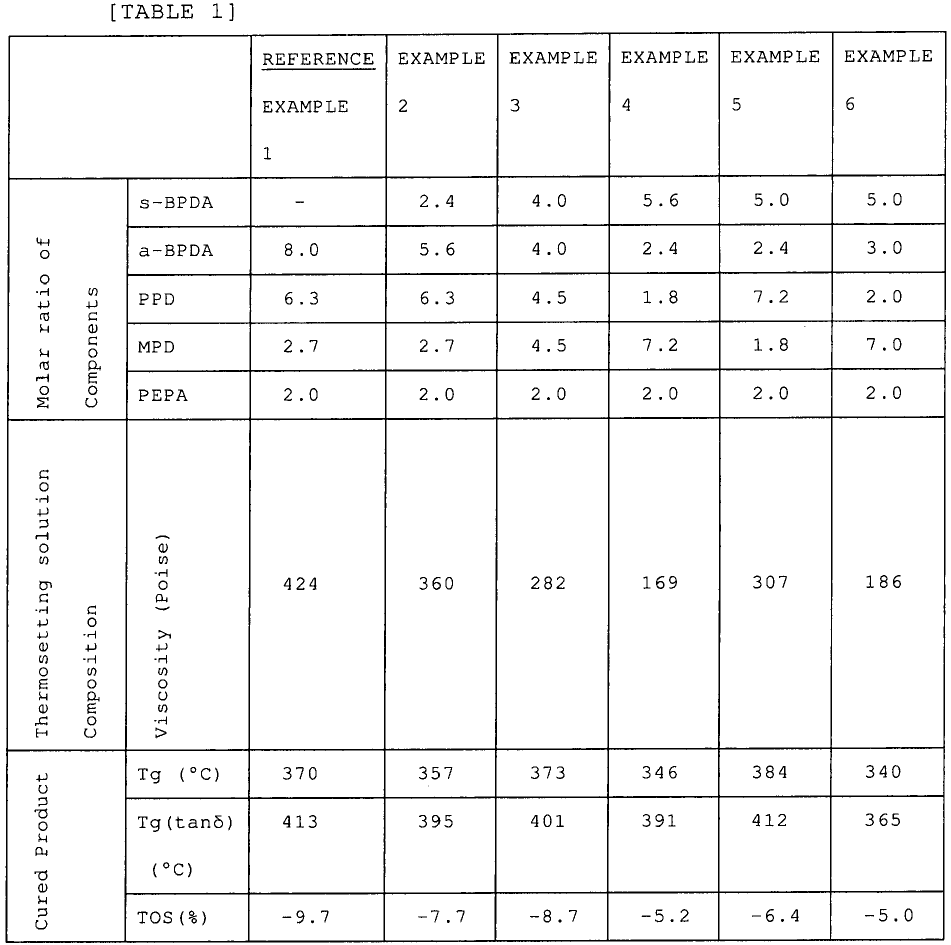

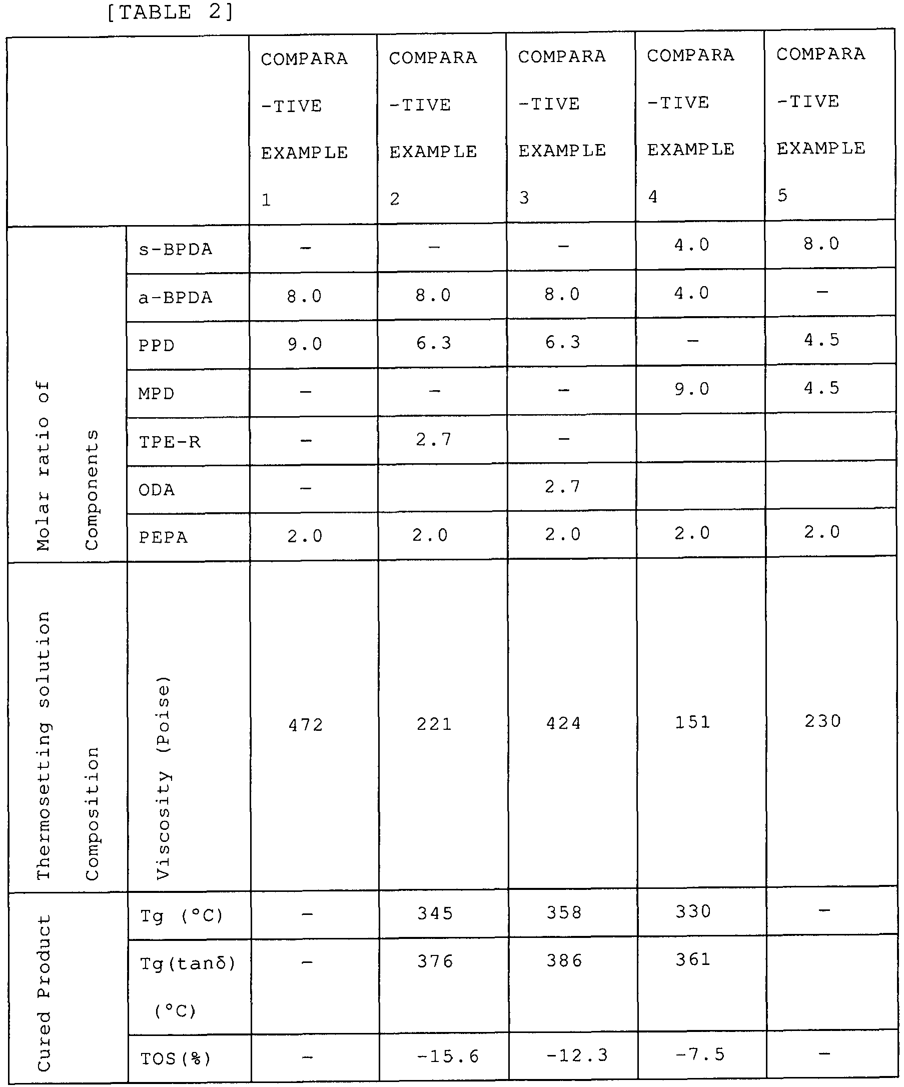

### [REFERENCE EXAMPLE 7]

In a separable flask were placed 47.10 g (0.1601 mol) of a-BPDA and 9.93 g (0.0400 mol) of PEPA, which were acid components, and 63.50g of methanol, which was a solvent, further added 0.1528 g of 2-Mz, which is a catalyst. The mixture was stirred under reflux condition to give a homogeneous solution. After the solution was cooled to a room temperature, 13.63 g (0.1260 mol) of PPD and 5.841g (0.0540 mol) of MPD, which were diamine components, were added to the solution, and the resulting solution was stirred to give a homogeneous thermosetting solution composition. This solution was introduced into a vessel made of polyimide film and the vessel was placed in an oven which is kept at a temperature of 80°C. The temperature in the oven was elevated at a rate of 2°C/minute to 260°C and was kept for 3 hours. The obtained solid matter was pulverized to give a thermosetting powder composition. This thermosetting powder composition was sandwiched between polyimide films, and the sandwitched structure was pressed by means of a press machine heated at a temperature of 290°C and warmed up to 370°C for 20 minutes. The structure was heat-treated at a temperature of 370°C for 60 minutes to give a resin film having a thickness of about 0.12 mm. The properties of this film are shown in Table 3.

### [REFERENCE EXAMPLE 8]

The procedures of Reference Example 7 were repeated except that the acid components consisting of 47.05 g (0.15996 mol) of a-BPDA and 9.94 g (0.0400 mol) of PEPA, the solvent consisting of 63.50 g of methanol, the catalyst consisting of 0.1529 g of 2-Mz, and the diamine components consisting of 9.73 g (0.0900 mol) of PPD and 9.73g (0.0900 mol) of MPD were used, to give a thermosetting solution composition and a film. The properties of the film are shown in Table 3.

### [REFERENCE EXAMPLE 9]

The procedures of Reference Example 7 were repeated except that the acid components consisting of 47.10 g (0.1601 mol) of a-BPDA and 9.94 g (0.0400 mol) of PEPA, the solvent consisting of 63.50 g of methanol, the catalyst consisting of 0.1510 g of 2-Mz, and the diamine components consisting of 3.91 g (0.0362 mol) of PPD and 15.60g (0.1443 mol*)* of MPD were used, to give a thermosetting solution composition and a film. The properties of the film are shown in Table 3.

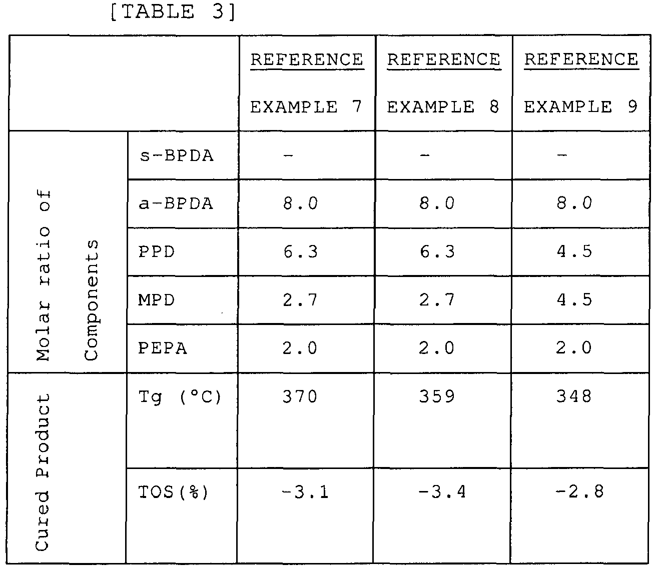

### [EXAMPLE 10]

The procedures of Reference Example 7 were repeated except that the acid components consisting of 14.11 g (0.0480 mol) of s-BPDA, 32.96 g (0.1120 mol) of a-BPDA and 9.95 g (0.0400 mol) of PEPA, the solvent consisting of 63.50 g of methanol, the catalyst consisting of 0.1530 g of 2-Mz, and the diamine components consisting of 13.63 g (0.1260 mol) of PPD and 5.84g (0.0540 mol) of MPD were used, to give a thermosetting solution composition and a film. The properties of the film are shown in Table 4.

### [EXAMPLE 11]

The procedures of Reference Example 7 were repeated except that the acid components consisting of 14.10 g (0.0479 mol) of s-BPDA, 32.94 g (0.1120 mol) of a-BPDA and 9.93 g (0.0400 mol) of PEPA, the solvent consisting of 63.14 g of methanol, the catalyst consisting of 0.1528 g of 2-Mz, and the diamine components consisting of 9.73 g (0.0900 mol) of PPD and 0.73g (0.0400 mol) of MPD were used, to give a thermosetting solution composition and a film. The properties of the film are shown in Table 4.

### [EXAMPLE 12]

The procedures of Reference Example 7 were repeated except that the acid components consisting of 14.13 g (0.0480 mol) of s-BPDA, 32.96 g (0.1120 mol) of a-BPDA and 9.93 g (0.0400 mol) of PEPA, the solvent consisting of 63.50 g of methanol, the catalyst consisting of 0.1530 g of 2-Mz, and the diamine components consisting of 3.89 g (0.0360 mol) of PPD and 15.57g (0.1440 mol) of MPD were used, to give a thermosetting solution composition and a film. The properties of the film are shown in Table 4.

### [EXAMPLE 13]

The procedures of Reference Example 7 were repeated except that the acid components consisting of 28.26 g (0.0961 mol) of s-BPDA, 18.82 g (0.0640 mol) of a-BPDA and 9.93 g (0.0400 mol) of PEPA, the solvent consisting of 63.50 g of methanol, the catalyst consisting of 0.1529 g of 2-Mz, and the diamine components consisting of 13.63 g (0.1260 mol) of PPD and 5.85g (0.0541 mol) of MPD were used, to give a thermosetting solution composition and a film. The properties of the film are shown in Table 4.

### [EXAMPLE 14]

The procedures of Reference Example 7 were repeated except that the acid components consisting of 28.25 g (0.0960 mol) of s-BPDA, 18.82 g (0.0640 mol) of a-BPDA and 9.93 g (0.0400 mol) of PEPA, the solvent consisting of 63.50 g of methanol, the catalyst consisting of 0.1530 g of 2-Mz, and the diamine components consisting of 9.73 g (0.0900 mol) of PPD and 9.73g (0.0900 mol) of MPD were used, to give a thermosetting solution composition and a film. The properties of the film are shown in Table 3.

### [EXAMPLE 15]

The procedures of Reference Example 7 were repeated except that the acid components consisting of 28.25 g (0.0960 mol) of s-BPDA, 18.85 g (0.0641 mol) of a-BPDA and 9.93 g (0.0400 mol) of PEPA, the solvent consisting of 63.50 g of methanol, the catalyst consisting of 0.1530 g of 2-Mz, and the diamine components consisting of 3.90 g (0.0361 mol) of PPD and 15.57 g (0.1440 mol) of MPD were used, to give a thermosetting solution composition and a film. The properties of the film are shown in Table 4.

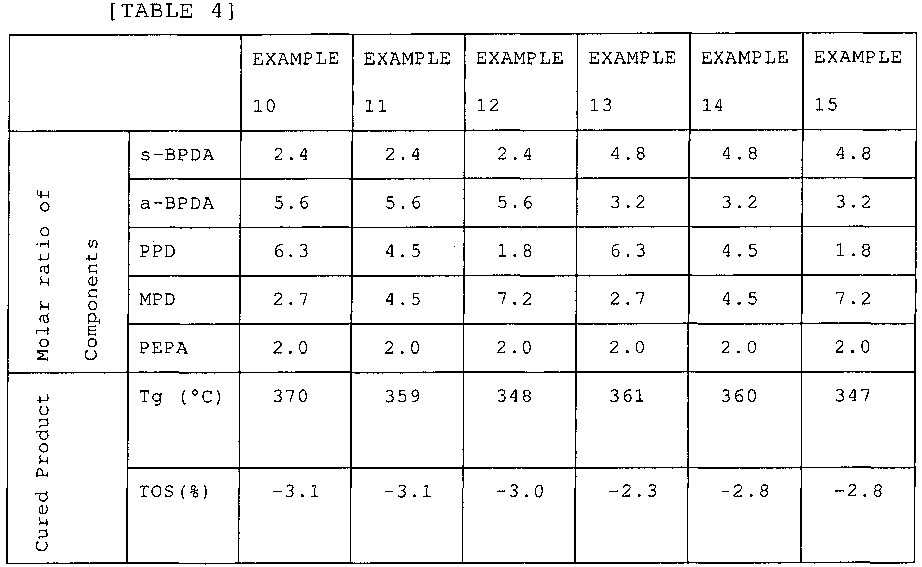

### [COMPARATIVE EXAMPLE 6]

The procedures of Reference Example 7 were repeated except that the acid components consisting of 18.83 g (0.0640 mol) of a-BPDA and 9.93 g (0.0400 mol) of PEPA, the solvent consisting of 73.44 g of methanol, the catalyst consisting of 0.1729 g of 2-Mz, and the diamine components consisting of 13.63 g (0.1260 mol) of PPD and 15.79 g (0.0540 mol) of TPE-R were used, to give a thermosetting solution composition and a film. The properties of the film are shown in Table 5. The obtained film had inferior TOS.

### [COMPARATIVE EXAMPLE 7]

The procedures of Reference Example 7 were repeated except that the acid components consisting of 18.83 g (0.0640 mol) of a-BPDA and 9.93 g (0.0400 mol) of PEPA, the solvent consisting of 68.47 g of methanol, the catalyst consisting of 0.1629 g of 2-Mz, and the diamine components consisting of 13.63 g (0.1260 mol) of PPD and 10.80 g (0.0539 mol) of 3,4'-ODA were used, to give a thermosetting solution composition and a film. The properties of the film are shown in Table 5. The obtained film had inferior TOS.

### [COMPARATIVE EXAMPLE 8]

The procedures of Reference Example 7 were repeated except that the acid components consisting of 28.25 g (0.0960 mol) of s-BPDA, 18.82 g (0.0640 mol) of a-BPDA and 9.92 g (0.0400 mol) of PEPA, the solvent consisting of 73.44 g of methanol, the catalyst consisting of 0.1729 g of 2-Mz, and the diamine components consisting of 13.63 g (0.1260 mol) of PPD and 15.79 g (0.0540 mol) of TPE-R were used, to give a thermosetting solution composition and a film. The properties of the film are shown in Table 5. The obtained film had inferior Tg and TOS.

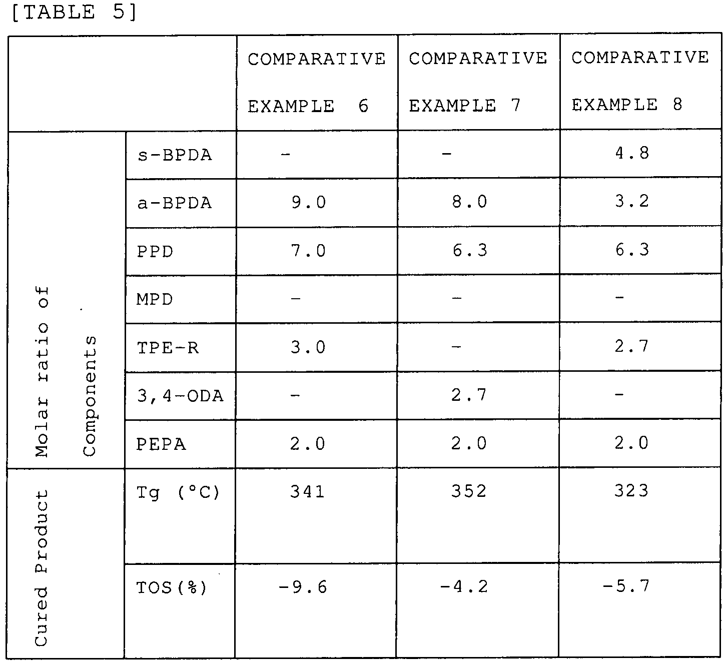

### [REFERENCE EXAMPLE 16]

Thermosetting solution compositions each having a solid content of 40-60 wt% were prepared using the composition shown in Table 6 by the method similar to that used in REFERENCE EXAMPLE 1. Carbon fiber fabric (HTS40 3K, basis weight of 200g/m²) produced by TOHO TENAX Co. Ltd., was impregnated with these thermosetting solution compositions, and dried in an oven at a temperature of 80 to 100°c for 10 to 30 minutes, to give prepregs. Drying condition was adjusted so that the volatile matter content after drying reached 15 wt%. Incidentally,
the volatile matter content was determined from the weight loss of each prepreg after it was heated at 250°c for 1 hour. Each of the resulting prepregs was cut into a size of 100 x 150 mm and 12 sheets of the cut plates were laminated and the laminated plates were placed in an oven and subjected to heat treatment under a pressure of 1.38 MPa at 370°c for 1 hour to give a carbon fiber-reinforced plastic plate (CFRP) having a thickness of 2.72 mm. It was found that the obtained CFRP plate was an excellent product without voids from a flaw detection test and observation of the cross section by means of a stereomicroscope. The properties of the CFRP plates are shown in Table 6.

### [EXAMPLE 17]

The procedures of Reference Example 16 were repeated except that the thermosetting solution composition was prepared using the composition shown in Table 6, to give a CFRP plate. Properties of the resulting CFRP plate are shown in Table 6.

### [COMPARATIVE EXAMPLE 9]

The procedures of Reference Example 16 were repeated except that the thermosetting solution composition was prepared using the composition shown in Table 6, to give a CFRP plate. Properties of the resulting CFRP plate are shown in Table 6. The CFRP plate had inferior Tg and TOS.

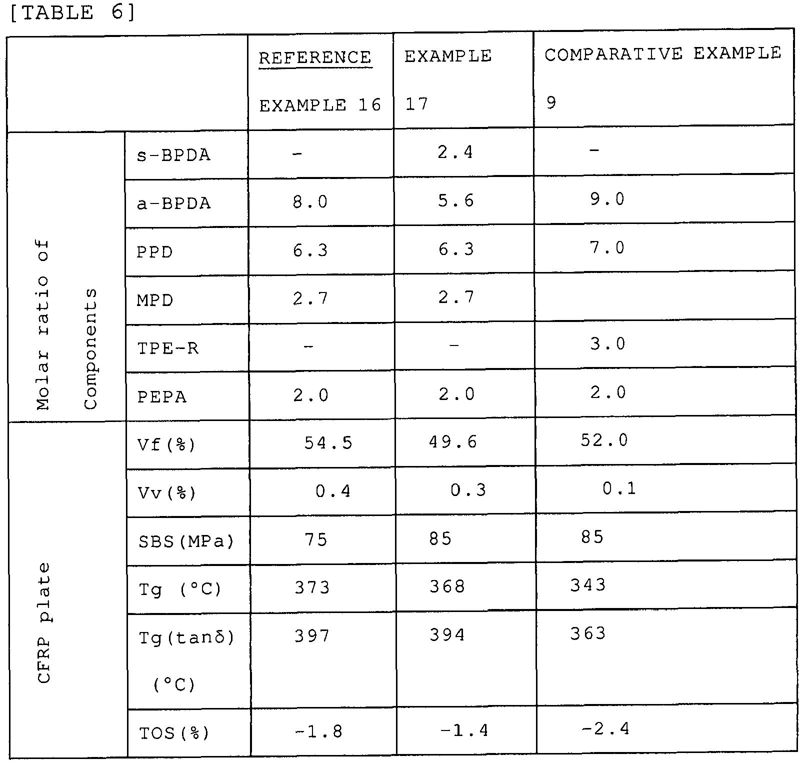

## Claims

1. A thermosetting solution composition **characterized by** being obtained by mixing:
(A) an aromatic tetracarboxylic acid component containing at least 20 mol % of a 2,3,3',4'-biphenyltetracarboxylic acid compound, and 20 to 80 mol % of a 3,3',4,4'-biphenyltetracarboxylic acid compound;
(B) an aromatic diamine component without an oxygen atom in a molecule thereof, containing aromatic diamine without an oxygen atom in a molecule thereof in which two carbon-nitrogen axes derived from amino groups are present on the same straight line, and aromatic diamine without an oxygen atom in a molecule thereof in which two carbon-nitrogen axes derived from amino groups are not present on the same straight line; and
(C) an end-capping agent having a phenylethynyl group.

2. The thermosetting solution composition according to claim 1, in which the aromatic diamine without an oxygen atom in a molecule thereof in which two carbon-nitrogen axes derived from amino groups are present on the same straight line is 1,4-diaminobenzene, and the aromatic diamine without an oxygen atom in a molecule thereof in which two carbon-nitrogen axes derived from amino groups are not present on the same straight line is 1, 3-diaminobenzene.

3. The thermosetting solution composition according to any one of claims 1 or 2, in which the (C) an end-capping agent having a phenylethynyl group is a 4-(2-phenylethynyl) phthalic acid compound.

4. A cured product **characterized by** being obtained by heat-curing the thermosetting solution composition according to any one of claims 1 to 3.

5. A prepreg **characterized by** being obtained by impregnating a fibrous reinforcing material with the thermosetting solution composition according to any one of claims 1 to 3.

6. A fiber-reinforced composite material **characterized by** being obtained by heat-curing the prepreg according to claim 5.

## Patentansprüche

1. Wärmehärtbare Lösungszusammensetzung, **dadurch gekennzeichnet, dass** sie erhalten wird durch Vermischen von:
(A) einer aromatischen Tetracarbonsäurekomponente, die wenigstens 20 mol% einer 2,3,3',4'-Biphenyltetracarbonsäureverbindung und 20 bis 80 mol % einer 3,3',4,4'-Biphenyltetracarbonsäureverbindung enthält;
(B) einer aromatischen Diaminkomponente ohne ein Sauerstoffatom in einem Molekül davon, die ein aromatisches Diamin ohne ein Sauerstoffatom in einem Molekül davon, in welchem zwei Kohlenstoff-Stickstoff-Achsen, die von Aminogruppen abgeleitet sind, auf der gleichen geraden Linie vorhanden sind, und ein aromatisches Diamin ohne ein Sauerstoffatom in einem Molekül davon, in welchem zwei Kohlenstoff-Stickstoff-Achsen, die von Aminogruppen abgeleitet sind, nicht auf der gleichen geraden Linie vorhanden sind, enthält; und
(C) einem Endverkappungsmittel, das eine Phenylethinylgruppe aufweist.

2. Wärmehärtbare Lösungszusammensetzung nach Anspruch 1, in der das aromatische Diamin ohne ein Sauerstoffatom in einem Molekül davon, in welchem zwei Kohlenstoff-Stickstoff-Achsen, die von Aminogruppen abgeleitet sind, auf der gleichen geraden Linie vorhanden sind, 1,4-Diaminobenzol ist, und das aromatische Diamin ohne ein Sauerstoffatom in einem Molekül davon, in welchem zwei Kohlenstoff-Stickstoff-Achsen, die von Aminogruppen abgeleitet sind, nicht auf der gleichen geraden Linie vorhanden sind, 1,3-Diaminobenzol ist.

3. Wärmehärtbare Lösungszusammensetzung nach einem der Ansprüche 1 oder 2, in welchem das (C) Endverkappungsmittel, das eine Phenylethinylgruppe aufweist, eine 4-(2-Phenylethinyl)phthalsäureverbindung ist.

4. Gehärtetes Produkt, **dadurch gekennzeichnet, dass** es durch Wärmehärten der wärmehärtbaren Lösungszusammensetzung nach einem der Ansprüche 1 bis 3 erhalten wird.

5. Prepreg, **dadurch gekennzeichnet, dass** es durch Imprägnieren eines faserartigen Verstärkungsmaterials mit' der wärmehärtbaren Lösungszusammensetzung nach einem der Ansprüche 1 bis 3 erhalten wird.

6. Faserverstärkter Verbundstoff, **dadurch gekennzeichnet, dass** er durch Wärmehärten des Prepregs nach Anspruch 5 erhalten wird.

## Revendications

1. Composition de solution durcissable à la chaleur **caractérisée en ce qu'**elle est obtenue par mélange :
(A) d'un composant acide tétracarboxylique aromatique contenant au moins 20 % en moles d'un composé acide 2,3,3',4'-biphényltétracarboxylique et de 20 à 80 % en moles d'un composé acide 3,3',4,4'-biphényltétracarboxylique ;
(B) d'un composant diamine aromatique dont une molécule est dépourvue d'atome d'oxygène, contenant une diamine aromatique dont une molécule est dépourvue d'atome d'oxygène dans laquelle deux axes carbone-azote issus de groupes amino sont situés sur la même ligne droite, et une diamine aromatique dont une molécule est dépourvue d'atome d'oxygène dans laquelle deux axes carbone-azote issus de groupes amino ne sont pas situés sur la même ligne droite ; et
(C) un agent de terminaison de chaîne ayant un groupe phényléthynyle.

2. Composition de solution durcissable à la chaleur selon la revendication 1, dans laquelle la diamine aromatique dont une molécule est dépourvue d'atome d'oxygène et où deux axes carbone-azote issus de groupes amino sont situés sur la même ligne droite est le 1,4-diaminobenzène, et la diamine aromatique dont une molécule est dépourvue d'atome d'oxygène et où deux axes carbone-azote issus de groupes amino ne sont pas situés sur la même ligne droite est le 1,3-diaminobenzène.

3. Composition de solution durcissable à la chaleur selon l'une quelconque des revendications 1 ou 2, dans laquelle l'agent de terminaison de chaîne (C) comprenant un groupe phényléthynyle est un composé acide 4-(2-phényléthynyl)phtalique.

4. Produit durci **caractérisé en ce qu'**il est obtenu par durcissement à chaud de la composition de solution durcissable à la chaleur selon l'une quelconque des revendications 1 à 3.

5. Préimprégné **caractérisé en ce qu'**il est obtenu par imprégnation d'un matériau de renfort fibreux au moyen de la composition de solution durcissable à la chaleur selon l'une quelconque des revendications 1 à 3.

6. Matériau composite renforcé par des fibres **caractérisé en ce qu'**il est obtenu par durcissement à chaud du préimprégné selon la revendication 5.
